# EUROPEAN PATENT APPLICATION

(11) **EP 4 768 440 A1**
(43) Date of publication of application: **01.07.2026**
(21) Application number: 23949340.6
(22) Date of filing: 21.08.2023
(51) Int. Cl.: C01G 41/00, B01J 23/652, B01J 23/92

(54) **COCATALYST RECOVERY METHOD**

(71) Applicant: Changchun Meihe Science and Technology Development Co., Ltd., Changchun, Jilin 130102 (CN)
(72) Inventor: YUAN, Yi, Changchun, Jilin 130102 (CN)
(74) Representative: Mathisen & Macara LLP
(86) International application number: PCT/CN2023/113929
(87) International publication number: WO 2025/039146

(57) **Abstract**

The present invention relates to a method for recovering a cocatalyst, including the following steps: (1) passing an alcohol reaction solution obtained from a biomass hydrogenation reaction through a cation exchange resin to adsorb and remove a cation of the cocatalyst; (2) adsorbing an anion of the cocatalyst by passing the cation-removed reaction solution through an anion exchange resin; (3) desorbing the anion exchange resin adsorbed with the anion to obtain a desorption solution and, optionally, washing the resin to obtain a rinse solution; (4) after mixing the desorption solution and optionally the rinse solution and then evaporating water, crystallizing the cocatalyst to obtain a solution containing a cocatalyst crystal; (5) subjecting the above solution containing a cocatalyst crystal to a solid-liquid separation to obtain a crystal and a mother liquor, wherein the resulting crystal is a recovered cocatalyst; (6) optionally, washing the crystal in step (5) with a solvent and obtaining a rinse|solution; (7) optionally, mixing the rinse solution in step (6) with the mother liquor in step (5), and optionally adding a solvent to the mixed solution, re-crystallizing and performing a solid-liquid separation to give a secondary crystal and a secondary mother liquor, mixing the resulting secondary crystal with the desorption solution and optionally the rinse solution obtained in step (3), wherein the cocatalyst has a high recovery yield and a low content of impurities.

## Description

### TECHNICAL FIELD

The present invention relates to a method for recovering a cocatalyst, and more particularly, to a method for recovering a cocatalyst used in the field of bio-based chemical synthesis, especially during the synthesis of a bio-based alcohol.

### TECHNICAL BACKGROUND

With the rapid depletion of global fossil resources, developing and utilizing renewable resources to achieve the sustainable development for human society has become an urgent issue to be addressed. Biomass is an abundant, renewable carbon-containing resource in nature. Producing bio-based chemicals from the biomass as raw material to replace their petroleum-based chemical counterparts has attracted an increasing worldwide attention, and also has driven a rapid progress in relevant production technologies.

The process that produces bio-based polyols from bio-based sugars as raw material via a catalytic method offers the advantages such as a low production cost, a low carbon emission and a low equipment investment. For example, patent application CN111606781A describes a method for preparing diols. It prepares diols by hydrocracking sugar and hydrogen gas as raw materials, using water as a solvent in the presence of a catalyst. It employs both a water-insoluble main catalyst and a cocatalyst, wherein the cocatalyst is a water-soluble tungstate and/or a water-insoluble tungsten compound. In other bio-based polyol production processes, water-soluble sodium or tungstate salts including sodium molybdate, ammonium metatungstate, ammonium tungstate and sodium phosphotungstate are also used as cocatalysts. Discharging these cocatalysts would lead to an environmental pollution and a significant increase in the process cost. A cocatalyst recovery process is needed to recover theses cocatalysts. However, these cocatalysts are all soluble in the liquid-phase reaction products and thus cannot be separated by conventional solid-liquid separation techniques. In addition, the sugar contains a small amount of ion impurities including chloride ion, sulfate ion, iron ion and other heavy metal ions than iron ion. The reaction products would also contain a small quantity of organic impurities, primarily sugar coke. Since all these impurities act as poisons to the main catalyst, the cocatalyst recovery process must also effectively separate them from the recovered cocatalyst and remove them from the system. If the cocatalyst recovery process fails to effectively remove these impurities, leading to the accumulation of these impurities in the system, the lifetime of the main catalyst will be shortened and the yield of the main product will decrease. In addition, in the subsequent polyol purification of the distillation section, the cocatalyst is remained in the heavy component at the bottom of the column. This increases the viscosity of the heavy component and may even cause the cocatalyst to crystallize. Consequently, it is impossible to reduce the diol content in these heavy components in the distillation section, thereby lowering the yield of the diol product.

Patents CN200410046815.X and CN03124661.3 disclose a method for treating a sodium tungstate solution with a high caustic concentration in the field of tungsten ore recovery. In the above patents, a strong-base anion exchange resin is employed to treat an alkaline crude sodium tungstate solution. Multiple fixed-bed exchange columns connected in series are used for the ion exchange operation, and only the saturated resins are desorbed using NH₄Cl and NH₄OH. However, in the above inventions, after adsorbing the tungstate ion by the strong-base anion exchange resin, the released chloride and hydroxide ions form sodium chloride and sodium hydroxide with the cations in the feed, making it still impossible to reduce the diol content in the heavy component from the distillation section. Moreover, to achieve a complete desorption of the adsorbed and saturated tungstate ion, the desorption agents of NH₄Cl and NH₄OH must be added in excess.

As a result, the finally obtained ammonium tungstate desorption solution would contain large amounts of NH₄Cl and NH₄OH. In the bio-based alcohol production reaction, the content of chloride ion in the cocatalyst on a dry basis must be below 100 ppm; otherwise, the alcohol yield and the lifetime of the main catalyst will be affected. The process does not separate NH₄Cl from the ammonium tungstate in the desorption solution.

Patent CN200610031475.2 discloses an ion exchange process for preparing an ammonium tungstate solution applied in the field of tungsten ore recovery. The above patent proposes an ion exchange process for preparing an ammonium tungstate solution and uses a macroporous weak-base anion exchange resin to treat a tungsten-containing solution. In order to increase the adsorption capacity of the resin for tungstic acid, the pH of a pre-exchange solution is adjusted to pH=4.1-1.9 using hydrochloric or sulfuric acid with a pH < 3 before introducing the feed into a resin adsorption system. After the resin adsorption, a qualified ammonium tungstate solution is obtained by the resin desorption using an ammonium salt solution of NH₄NO₃ or NH₄Cl. Since the hydrochloric and sulfuric acids are used to adjust the pH of the pre-exchange solution of the above invention, small amounts of chloride and sulfate ions would be adsorbed by the macroporous weak-base anion exchange resin, inevitably leading to the introduction of more chloride and sulfate ions in the refined ammonium tungstate. If the content of chloride or sulfate ions on a dry basis exceeds 100 ppm in the recycled cocatalyst, it will severely affect the yield of the bio-based alcohol production reaction and the lifetime of the main catalyst. Furthermore, in the invention, sodium salts would also be produced during the resin adsorption and introduced into the alcohol reaction solution, leading to failure to reduce the diol content in the heavy component of the distillation section.

Patent application CN109956501A discloses a method for recycling sodium tungstate during L-(+)-tartaric acid production process applied in the technical field of tartaric acid preparation, which involves introducing the resulting crude tartaric acid solution prepared during tartaric acid production process into a resin column to adsorb sodium tungstate, desorbing the resin column using sodium hydroxide, and recycling the resulting desorption solution to the tartaric acid production. However, the process results in an overly high content of sodium hydroxide in the refined sodium tungstate on a dry basis since it inevitably adds sodium hydroxide in excess during desorption. The content of sodium hydroxide on a dry basis in the cocatalyst recycled to the bio-based alcohol production reaction should not exceed 1 wt%; otherwise, it will affect the yield of the bio-based alcohol production reaction. Moreover, in the invention, sodium hydroxide would also be produced during resin adsorption and introduced into an alcohol reaction solution, which results in failure to reduce the diol content in the heavy component during the distillation section.

### CONTENTS OF THE INVENTION

The technical problem to be solved in the present invention is to provide a method for recovering a cocatalyst used during a process of a bio-based alcohol preparation, including following steps:
(1) passing an alcohol reaction solution obtained from a biomass hydrogenation reaction through a cation exchange resin to adsorb and remove a cation of the cocatalyst;
(2) adsorbing an anion of the cocatalyst by passing the cation-removed reaction solution through an anion exchange resin;
(3) desorbing the anion exchange resin adsorbed with the anion to obtain a desorption solution and, optionally, washing the resin to obtain a rinse solution;
(4) after mixing the desorption solution and optionally the rinse solution and then evaporating water, crystallizing the cocatalyst to obtain a solution containing a cocatalyst crystal;
(5) subjecting the above solution containing a cocatalyst crystal to a solid-liquid separation to obtain a crystal and a mother liquor, wherein the resulting crystal is a recovered cocatalyst;
(6) optionally, washing the crystal in step (5) with a solvent and obtaining a rinse solution;
(7) optionally, mixing the rinse solution in step (6) with the mother liquor in step (5), and optionally adding a solvent to the mixed solution, re-crystallizing and performing a solid-liquid separation to give a secondary crystal and a secondary mother liquor, mixing the resulting secondary crystal with the desorption solution and optionally the rinse solution obtained in step (3).

Herein, the alcohol refers to a diol, which optionally includes a monohydric alcohol and/or a polyol. The monohydric alcohol refers to the alcohol containing one hydroxyl group in the molecule, such as methanol and ethanol, etc., and these alcohols may be present alone or in combination with each other. The diol refers to the alcohol containing two hydroxyl groups in the molecule, such as ethylene glycol and propylene glycol, etc., and these alcohols may be present alone or in combination with each other. The polyol refers to the alcohol containing more than two hydroxyl groups in the molecule, such as glycerol and sorbitol, etc., and these alcohols may be present alone or in combination with each other.

Herein, the cocatalyst is preferably selected from sodium salts or tungsten salts, more preferably selected from one or more of ammonium tungstate, sodium phosphotungstate, sodium molybdate, and sodium tungstate.

In the recovered cocatalyst, the content of sodium hydroxide is 1 wt% or less, and the total content of ion impurities is less than 3 wt%. Preferably, the contents of the iron ion, other heavy metal ions (including mercury ion and lead ion) than the iron ion, chloride ion, and sulfate ion are respectively less than 100 ppm. The content of organic impurities (primarily sugar coke) is less than 1 wt%. The recovery yield of the cocatalyst is greater than 90%, preferably greater than 95%, more preferably greater than 98%, and particularly preferably greater than 99%.

Herein, the biomass preferably refers to a sugar compound, such as glucose, xylose, fructose, sucrose, arabinose, polysaccharide, etc. These types of biomass may be present alone or in combination with each other.

The alcohol reaction solution obtained from the above biomass hydrogenation (hereinafter sometimes referred to as the "reaction solution" in short) preferably contains, more preferably consists of, the following components:
1-100 wt%, preferably 10-100 wt%, particularly preferably 40-100 wt%, of water, excluding the endpoint of 100 wt%;
0-98 wt%, preferably 0-90 wt%, particularly preferably 0-60 wt%, of alcohol, excluding the endpoint of 0;
0-50 wt%, preferably 0-10 wt%, of organic impurities primarily composed of sugar coke;
a total content of 0-10 wt%, preferably 0-2 wt%, of ion impurities, preferably selected from chloride ion, sulfate ion, iron ion, other heavy metal ions (including mercury ion and lead ion) than the iron ion, formate ion, acetate ion, and glycolate ion;
and 0-10 wt%, preferably 0-5 wt%, particularly preferably 0-1 wt%, of the cocatalyst, excluding the endpoint of 0.

In one embodiment, the cocatalyst recovered in step (5) is sent back to step (1) for the biomass hydrogenation so as to prepare the alcohol reaction solution.

In one embodiment, the cation exchange resin adsorbing the cation in step (1) is desorbed, preferably through an inorganic acid, such as hydrochloric acid or sulfuric acid, and the resulting desorption solution is optionally further treated to recover a sodium salt, such as sodium chloride or sodium sulfate.

In one embodiment, the reaction solution free of the cocatalyst obtained after adsorbing the anion in step (2) is subjected to a distillation to obtain an alcohol, in particular, a diol.

In one embodiment, the desorption in step (3) is performed using an inorganic base and/or an inorganic salt, such as sodium hydroxide, potassium hydroxide or ammonium nitrate. Preferably, the dehydration in step (4) stops when the weight ratio of the inorganic base and/or the inorganic salt to water is 0.05-5:1, preferably 0.1-2:1, particularly preferably 0.1-1:1 in the solution.

In one embodiment, the anion exchange resin adsorbing the anion in step (3) is washed with demineralized water after desorption, preferably until the content of the inorganic base and/or the inorganic salt (such as sodium hydroxide) is less than 10ppm, to give a rinse solution, and the mixed solution obtained after mixing the rinse solution with the desorption solution is used in the evaporation and crystallization step in step (4). Preferably, the evaporated water obtained in the evaporation process in step (4) is used for washing the anion exchange resin after desorption in step (3).

In one embodiment, the adsorption is carried out in step (1) using one or more cation exchange resin columns, for example, the adsorption is carried out using three to four cation exchange resin columns connected in series.

In one embodiment, the adsorption is carried out in step (2) using one or more anion exchange resin columns, for example, the adsorption is carried out using three to four anion exchange resin columns connected in series.

In one embodiment, the solvent in steps (6) and (7) is an aqueous or non-aqueous organic solvent. Herein, the organic solvent is preferably selected from monohydric alcohols, such as methanol, ethanol, isopropanol, etc. These alcohols may be present alone or in combination with each other.

In one embodiment, the solvent is recovered from the rinse solution obtained in step (6).

In one embodiment, the solvent is recovered from the secondary mother liquor obtained in step (7).

In one embodiment, the evaporation in step (4) is carried out under an operating pressure of ≥0.1 kPaA, preferably 0.1 kPaA-200 kPaA.

In one embodiment, the temperature is decreased after the water evaporation in step (4).

In the present invention, the cation exchange resin is preferably selected from a strong-acid cation exchange resin, and more preferably selected from a strong-acid cation exchange resin with a functional group being a sulfonic acid group (R-SO₃H).

In the present invention, the anion exchange resin is preferably selected from a strong-base anion exchange resin and/or a weak-base anion exchange resin, and more preferably selected from a strong-base anion exchange resin with a functional group being R-N(CH₃)₃OH and/or R-N(CH₃)₂(C₂H₄OH)OH, and/or a weak-base anion exchange resin with a functional group being a primary amine, a secondary amine, and/or a tertiary amine.

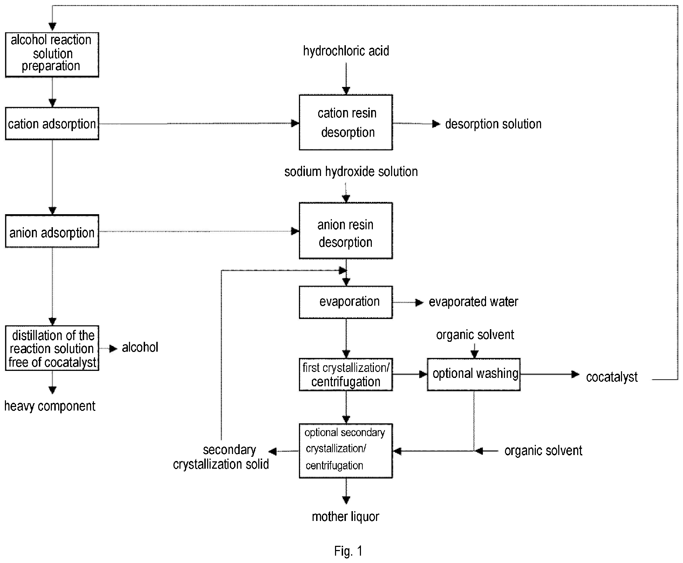

For example, with reference to Figure 1 and taking the sodium tungstate cocatalyst as an example (the following experimental conditions are not limited to sodium tungstate), the method of the present invention is carried out as follows:
an alcohol reaction solution is introduced into a cation adsorption section at a flow rate of 0.1 to 20 times the resin volume per hour, preferably 0.1 to 10 times, to adsorb the cation in the cocatalyst. Following the cation adsorption, the reaction solution is sent to an anion adsorption section.

Herein, the cation adsorption section involves using one or more cation exchange resin columns, for example, three to four cation exchange resin columns connected in series.

During the cation adsorption, the content of the cation contained in the cocatalyst in the effluent reaction solution is monitored in real time. When a cation appears in the effluent reaction solution, the resin column that has adsorbed the cation can be isolated from the cation adsorption section. For example, when multiple cation exchange resin columns connected in series are used in the cation adsorption section, the regenerated resin column is connected at the outlet of the last resin column in the resin system after the regeneration of the resin column that has adsorbed the cation is completed. Herein, for example, the isolated resin column is regenerated using a hydrochloric acid solution and the residual hydrochloric acid in the regenerated resin column is washed with demineralized water. The resin column in which the regeneration of the resin is completed is connected to the system again after other resin columns are isolated. When one resin column is used in the cation adsorption section, the reaction solution is adsorbed again after the isolated resin column is regenerated according to the above regeneration procedure.

Following the cation removal, the reaction solution is introduced into the anion adsorption section at 0.1 to 20 times the resin volume per hour, preferably 0.1 to 10 times, to adsorb the anion in the cocatalyst. After the adsorption by the anion exchange resin, the reaction solution free of the cocatalyst is fed to a distillation section, and the alcohol (in particular, the monohydric alcohol and the diol) would be purified in the distillation section. Since all of the anion and the cation carried in the cocatalyst have been removed from the alcohol reaction solution, the content of the monohydric alcohol and the diol in the bottom waste heavy component produced from the distillation may be reduced to 5 wt% or less, and thereby the yield of alcohol may be increased.

Herein, the anion adsorption section involves using one or more anion exchange resin columns, for example, three to four anion exchange resin columns connected in series.

During the anion exchange resin adsorption, the content of the anion in the cocatalyst in the resin system effluent reaction solution is monitored in real time. When the anion is detected in the effluent reaction solution, the resin column that has adsorbed the anion can be isolated from the anion adsorption section. For example, when multiple anion exchange resin columns connected in series are used in the anion adsorption section, the regenerated resin column is connected at the outlet of the last resin column in the anion adsorption section after the regeneration of the resin column that has adsorbed the anion is completed. Herein, the isolated anion exchange resin is regenerated using a sodium hydroxide aqueous solution and the residual cocatalyst and sodium hydroxide in the regenerated resin column are washed with demineralized water. The regenerated resin column is connected to the system again after other resin columns are isolated. After mixing, the desorption solution of the anion exchange resin and the rinse solution after washing the anion exchange resin are fed to an evaporation-crystallization section for a sodium tungstate purification. When one resin column is used in the anion adsorption section, the reaction solution is adsorbed again after with the isolated resin column is regenerated according to the above regeneration procedure.

The desorption solution and the rinse solution in the anion adsorption section are mixed and added to an evaporation-dehydration vessel with an agitator, dehydrated at an operating pressure of ≥0.1 kPaA, preferably 0.1 kPaA-200 kPaA, and the removed water (i.e. the evaporated water) can be used to wash the residual sodium tungstate and sodium hydroxide in the regenerated anion exchange resin. When the weight ratio of sodium hydroxide to water in the solution of the evaporation-dehydration vessel is 0.05-5:1, preferably 0.1-2:1, particularly preferably 0.1-1:1, the dehydration stops. The dehydrated solution is added to a first crystallization vessel with an agitator for crystallization at a crystallization temperature of 0-100°C, preferably 0-80°C, particularly preferably 10~40°C, and is held at the above temperature over a period of greater than 0.1 hour, preferably greater than 1 hour.

The crystallization slurry is discharged from the bottom of the first crystallization vessel to a filter or a centrifuge for a solid-liquid separation. In the filter cake after the solid-liquid separation, the sodium hydroxide content is <1wt%, the purity of the cocatalyst on a dry basis is >90.0wt%, the total content of ion impurities is less than 3wt%, the contents of chloride ion, sulfate ion, iron ion and other heavy metal ions (including mercury ion and lead ion) than iron ion are respectively less than 100 ppm, the impurity of the sugar coke is less than 1 wt%. The recovery yield of the cocatalyst is greater than 90%, preferably greater than 95%, more preferably greater than 98%, and particularly preferably greater than 99%. The refined cocatalyst product is recycled to the biomass hydrogenation reaction process. If the section of the biomass hydrogenation reaction for preparing the alcohol reaction solution has a higher requirement on the purity of the recycled cocatalyst, an aqueous or non-aqueous organic solvent may be further used to wash the filter cake in order to clean sodium hydroxide and ion impurities in the filter cake. If a further improvement on the yield of the recycled cocatalyst is desirable, when washing the filter cake with the aqueous or non-aqueous organic solvent, the resulting rinse solution and the mother liquor obtained after the first crystallization and the solid-liquid separation as above are mixed, and the organic solvent is supplemented such that the weight ratio of (the organic solvent + the rinse solution) to the mother liquor is 0-10:1 (excluding endpoint 0), preferably 0-5:1 (excluding endpoint 0) for re-crystallization (or referred to as a secondary crystallization) is carried out at, for example, 0-100°C, preferably 0-80°C, particularly preferably 10-40°C for a period of greater than 0.1 hour, preferably greater than 1 hour. The mother liquor obtained after the re-crystallization and a solid-liquid separation is discharged from the system, and the organic solvent is recovered while the filter cake is recycled to the desorption solution obtained by desorbing the anion exchange resin.

Through the present invention, the recovery of the cocatalyst via the resin adsorption is achieved in the field of the biomass hydrogenation reaction for preparing the alcohol. Specifically speaking, treating the cation in the reaction solution with the cation exchange resin and releasing H⁺ at the same time reduce the pH in the reaction solution, increase the adsorption capacity and the adsorption rate of the subsequent adsorption of the cocatalyst by the anion exchange resin, and simultaneously prevent the effect on the alcohol reaction yield, which is caused by chloride ion and sulfate ion produced from the added acidic substance such as hydrochloric acid or sulfuric acid. During the process of obtaining the monohydric alcohol and the diol by distilling the reaction solution free of the cocatalyst obtained after the anion exchange resin adsorption, the contents of the monohydric alcohol and the diol in the heavy component of the column bottom in the distillation section may be reduced to 5wt% or less. The sodium hydroxide introduced into the system via the resin desorption is reduced to 1wt% or less in the recovered cocatalyst by the means such as evaporation, crystallization, washing, which prevents the adverse effect on the biomass hydrogenation reaction during the recycling of sodium hydroxide in the recovered cocatalyst. Moreover, the total content of ion impurities in the recovered cocatalyst is <3wt%, preferably the contents of iron ion, other heavy metal ions (including mercury ion and lead ion) than iron ion, chloride ion and sulfate ion are respectively less than 100 ppm, the content of the organic impurities (primarily sugar coke) is less than 1 wt%, which also prevents the adverse effect on the biomass hydrogenation reaction, which is caused by these ion impurities and sugar coke in the recovered cocatalyst when recycling. The process provided in the present invention can achieve a cocatalyst recovery yield of 90% or more.

### DESCRIPTION OF DRAWINGS

1. Figure 1 is one process flow diagram of the technical solution according to the present invention.
2. Figure 2 is the process flow diagram of the technical solution of Comparative Example 1.

### SPECIFIC EMBODIMENTS

The present invention is further explained and illustrated by the Examples below, which, however, should not be construed as limiting the invention.

### Example 1:

An alcohol reaction solution containing 0.4wt% sodium tungstate as the cocatalyst, 35wt% ethylene glycol, 3wt% propylene glycol, 1wt% glycerol, 1wt% methanol, 3wt% other alcohols, 1.3 ppm chloride ion, 2.4 ppm sulfate ion, 1 ppm iron ion, 1 ppm other heavy metal ions (including lead ion and mercury ion) than iron ion, 0.3wt% glycolate ion, 1.6wt% coke impurities and the residual water was fed to the cation adsorption section at a flow rate of 4000ml/hr.

The cation adsorption section consists of four resin columns and the resin volume per each column is 1000 ml. LSI-010 resin manufactured by Sunresin New Materials Co.,Ltd was selected as the cation exchange resin. The resin is a strong-acid cation exchange resin with a functional group of sulfonic acid group (R-SO₃H).

The reaction solution was firstly introduced into the first cation exchange resin column from top to bottom for a cation adsorption, and the effluent was introduced into the anion exchange resin adsorption section. When sodium ion in the effluent of the first cation exchange resin column was > Oppm, the effluent of the first cation exchange resin column was introduced into the second cation exchange resin column, and the effluent of the second cation exchange resin column was sent to the anion exchange resin adsorption section; when sodium ion in the effluent of the second cation exchange resin column was > Oppm, the effluent of the second cation exchange resin column was introduced into the third cation exchange resin column, and the effluent of the third cation exchange resin column was sent to the anion exchange resin adsorption section; when sodium ion in the effluent of the third cation exchange resin column was > Oppm, the effluent of the third cation exchange resin column was introduced into the fourth cation exchange resin column, and the effluent of the fourth column was sent to the anion exchange resin adsorption section, and the alcohol reaction solution feed was switched to the second cation exchange resin column at the same time, whereas the effluent of the first cation exchange resin column was temporarily stopped from entering the second cation exchange resin column and the first cation exchange resin column was isolated. The residual reaction solution in the first cation exchange resin column was purged with nitrogen, and the resin column was washed with demineralized water until the alcohol content in the cleaning solution was < 100ppm. The purged and washed residual reaction solution were recycled to the reaction solution feed in the cation exchange section. The isolated cation exchange resin column was desorbed and regenerated from top to bottom using 7wt% hydrochloric acid aqueous solution at a flow rate of 2000ml/hr. The regenerated first cation exchange resin column was washed with demineralized water until the content of chloride ion in water was less than 10ppm, and then the effluent reaction solution of the fourth cation exchange resin column was introduced into the desorbed first cation exchange resin column, and at the moment the effluent of the first cation exchange resin column was sent to the anion adsorption section. The feed and the effluent of the cation exchange resin columns were switched on a rotating basis according to the sequence described above.

The anion exchange resin adsorption section consists of four resin columns and the resin volume per each resin column is 1000 ml. CR-W630 resin manufactured by Henan Ruisheng New Material Technology Co., Ltd. was selected as the anion exchange resin. The resin is a weak-base anion exchange resin with a functional group of tertiary amino group.

The effluent alcohol reaction solution of the cation adsorption section was firstly introduced into the first anion exchange resin column from top to bottom for an anion adsorption, and the effluent was sent to the distillation section. When tungstate ion in the effluent of the first anion exchange resin column was > Oppm, the effluent of the first anion exchange resin column was introduced into the second anion exchange resin column, and the effluent of the second anion exchange resin column was sent to the distillation section; when tungstate ion in the effluent of the second anion exchange resin column was > Oppm, the effluent of the second anion exchange resin column was introduced into the third anion exchange resin column, and the effluent of the third anion exchange resin column was sent to the distillation section; when tungstate ion in the effluent of the third anion exchange resin column was > Oppm, the effluent of the third anion exchange resin column was introduced into the fourth anion exchange resin column, and the effluent of the fourth anion exchange resin column was sent to the distillation section, and the effluent of the cation adsorption section was switched to the second anion exchange resin column at the same time. The effluent of the first anion exchange resin column was temporarily stopped from entering the second anion exchange resin column and the first anion exchange resin column was isolated. The residual reaction solution in the first anion exchange resin column was purged with nitrogen, and the resin column was washed with demineralized water until the alcohol content in the cleaning solution was < 100ppm. The purged and washed residual reaction solution was recycled to the reaction solution feed in the anion exchange section. The isolated anion exchange resin column was further desorbed and regenerated from top to bottom using 13wt% sodium hydroxide aqueous solution at a flow rate of 2000ml/hr, and a desorption solution was produced at the same time. The regenerated anion exchange resin column was washed with demineralized water until the content of sodium hydroxide in water was less than 10ppm (herein, a rinse solution was produced), the effluent of the fourth anion exchange resin column was introduced into the desorbed first anion exchange resin column, and at the moment the effluent of the first anion exchange resin column was sent to the distillation section. The mixed solution of the desorption solution and the rinse solution was evaporated and crystallized. After the circulation began, the following secondary crystallization solid was also mixed with the desorption solution and the rinse solution.

The mixed solution was fed to an evaporation-dehydration vessel with a negative pressure and an agitator, and dehydrated at an operating pressure of 8 kPaA to give evaporated water. The dehydration stopped when the weight ratio of sodium hydroxide to water was 0.45:1 in the mixed solution within the evaporation-dehydration vessel. The dehydrated mixed solution was added to a crystallization vessel equipped with an agitator and a jacket for circulating the cooling water for stirring and decreasing the temperature. When the temperature dropped to 10°C, the temperature was maintained for crystallization over a period of 12 hours. The crystallization solution containing a crystal was discharged from the bottom of the crystallization vessel to a centrifuge for a centrifugal separation. The solid portion after centrifugation were washed using a solution containing 43wt% methanol, 49wt% ethanol, 3wt% isopropanol and 5wt% water as an organic solvent at a solution-to-solid weight ratio of 1:1. The washed solid portion was the recovered cocatalyst and was recycled to the reaction section of the biomass hydrogenation reaction for preparing the alcohol; The organic solvent was further added to the washed rinse solution such that the weight ratio of the mixture of the rinse solution and the organic solvent to the mother liquor of the first crystallization was up to 2.5: 1. The mixture of the rinse solution and the organic solvent and the mother liquor of the first crystallization were mixed and added to a secondary crystallization vessel for a secondary crystallization at 10°C over a period of 0.5 hour after stirring and mixing. After the secondary crystallization, a second centrifugation was performed. The mother liquor after the second centrifugation was discharged from the system and the organic solvent was recovered. The solid after the secondary crystallization was mixed with the feed of the evaporation-dehydration vessel. The solid portion after centrifugation was the recovered cocatalyst and was recycled to the reaction section of the biomass hydrogenation reaction for preparing the alcohol; the mother liquor after centrifugation was discharged from the system.

In the recovered cocatalyst on a dry-basis, the content of sodium tungstate was 99.73wt%, the content of sodium hydroxide was 0.21wt%, the content of chloride ion was 64ppm, the content of sulfate ion was 77ppm, no iron ion and no other heavy metal ions than iron ion were detected, no coke impurities were detected, the balance on a dry basis was sodium glycolate. The recovery yield of sodium tungstate was 97.8%. The content of the monohydric alcohol and the diol in the heavy component of the distillation section was 3wt%.

### Example 2:

The weight ratio of the mixture of the rinse solution and the organic solvent to the mother liquor of the first crystallization in Example 1 was changed from 2.5:1 to 1:1. The temperature for the secondary crystallization was changed from 10°C to 40°C. Other experiment conditions were the same as those of Example 1.

In the recovered cocatalyst on a dry-basis, the content of sodium tungstate was 99.69wt%, the content of sodium hydroxide was 0.06wt%, the content of chloride ion was 18ppm, the content of sulfate ion was 43ppm, no iron ion and no other heavy metal ions than iron ion were detected, no coke impurities were detected, the balance on a dry basis was sodium glycolate. The recovery yield of sodium tungstate was 98.12%. The content of the monohydric alcohol and the diol in the heavy component of the distillation section was 3wt%.

### Example 3:

The temperature for the first crystallization in Example 1 was changed from 10°C to 25°C. The temperature for the secondary crystallization was changed from 10°C to 25°C. Other conditions were the same as those of Example 1.

In the recovered cocatalyst on a dry-basis, the content of sodium tungstate was 99.88wt%, the content of sodium hydroxide was 0.05wt%, the content of chloride ion was 17ppm, the content of sulfate ion was 30ppm, no iron ion and no other heavy metal ions than iron ion were detected, no coke impurities were detected, the balance on a dry basis was sodium glycolate. The recovery yield of sodium tungstate was 99.67%. The content of the monohydric alcohol and the diol in the heavy component of the distillation section was 3wt%.

### Example 4:

The weight ratio of sodium hydroxide to water in the mixed solution within the evaporation-dehydration vessel when the dehydration stopped in Example 1 was changed from 0.45:1 to 0.2:1. The temperature for the secondary crystallization was changed from 10°C to 40°C. Other conditions were the same as those of Example 1.

In the recovered cocatalyst on a dry-basis, the content of sodium tungstate was 99.87wt%, the content of sodium hydroxide was 0.05wt%, the content of chloride ion was 19ppm, the content of sulfate ion was 38ppm, no iron ion and no other heavy metal ions than iron ion were detected, no coke impurities were detected, the balance on a dry basis was sodium glycolate. The recovery yield of sodium tungstate was 99.31%. The content of the monohydric alcohol and the diol in the heavy component of the distillation section was 3wt%.

### Example 5:

As to the organic solvent, the solution containing 43wt% methanol, 49wt% ethanol, 3wt% isopropanol and 5wt% water of Example 1 was changed to a solution containing 95wt% ethanol and 5wt% water. The weight ratio of the organic solvent used in washing to the solid obtained after the first centrifugation was changed from 1:1 to 2.5:1. After washing the solid obtained by the first centrifugation with the organic solvent, the rinse solution was not mixed with the mother liquor obtained by the first centrifugation and was directly discharged from the system without the secondary crystallization and the second centrifugation. Other conditions were the same as those of Example 1.

In the recovered cocatalyst on a dry-basis, the content of sodium tungstate was 99.54wt%, the content of sodium hydroxide was 0.11wt%, the content of chloride ion was 24ppm, the content of sulfate ion was 43ppm, no iron ion and no other heavy metal ions than iron ion were detected, no coke impurities were detected, the balance on a dry basis was sodium glycolate. The recovery yield of sodium tungstate was 96.8%. The content of the monohydric alcohol and the diol in the heavy component of the distillation section was 3wt%.

### Example 6:

The anion exchange resin in Example 1 was changed from CR-W630 to LSI-021 resin manufactured by Sunresin New Materials Co.,Ltd. The resin is a strong-base anion exchange resin with a functional group of R-N(CH₃)₃OH. The concentration of the sodium hydroxide aqueous solution for the anion exchange resin regeneration was changed from 13wt% to 5wt%. The pressure for the evaporation dehydration was changed from 8 kPaA to 110 kPaA. The first crystallization temperature was changed from 10°C to 25°C. The first crystallization time period was changed from 12 hours to 3 hours. The solid obtained after the first centrifugation was not washed with an organic solvent, were directly used as the recovered cocatalyst and recycled to the reaction section of the biomass hydrogenation reaction for preparing the alcohol. Other conditions were the same as those of Example 1.

In the recovered cocatalyst on a dry-basis, the content of sodium tungstate was 96.9wt%, the content of sodium hydroxide was 0.90wt%, the content of chloride ion was 26ppm, the content of sulfate ion was 80ppm, no iron ion and no other heavy metal ions than iron ion were detected, no coke impurities were detected, the balance on a dry basis was sodium glycolate. The recovery yield of sodium tungstate was 90.6%. The content of the monohydric alcohol and the diol in the heavy component of the distillation section was 3wt%.

### Example 7:

The feed conditions of Example 1 were adopted, and the operations were carried out according to the following steps.

The cation adsorption section consists of one resin column, and the resin volume per each column is 1000 ml. LSI-010 resin manufactured by Sunresin New Materials Co.,Ltd was selected as the cation exchange resin. The resin is a strong-acid cation exchange resin with a functional group of sulfonic acid group (R-SO₃H).

The reaction solution was firstly introduced into the cation exchange resin column from top to bottom for a cation adsorption, and the effluent was sent to the anion exchange resin adsorption section. When sodium ion in the effluent of the cation exchange resin column was > Oppm, the reaction solution feed was halted. The residual reaction solution in the cation exchange resin column was purged with nitrogen, and the resin column was washed with demineralized water until the alcohol content in the cleaning solution was < 100ppm. The purged and washed residual reaction solution was recycled to the reaction solution feed in the cation exchange adsorption section. The isolated cation exchange resin column was further desorbed and regenerated from top to bottom using 7wt% hydrochloric acid aqueous solution at a flow rate of 2000ml/hr. The regenerated cation exchange resin column was washed with demineralized water until the content of chloride ion in water was less than 10ppm, and the reaction solution was then fed to the cation exchange resin column again, and at the moment the effluent of the cation exchange resin column was sent to the cation adsorption section. The feed and the effluent of the cation exchange resin column were switched on a rotating basis according to the sequence described above.

The anion adsorption section consists of one resin column, and the resin volume per each column is 1000 ml. LSI-021 resin manufactured by Sunresin New Materials Co.,Ltd was selected as the anion exchange resin. The resin is a strong-base anion exchange resin with a functional group of R-N(CH₃)₃OH.

The effluent alcohol reaction solution of the cation adsorption section was firstly introduced into the anion exchange resin column from top to bottom for an anion adsorption, and the effluent was sent to the distillation section. When tungstate ion in the effluent of the anion exchange resin column was > Oppm, the reaction solution feed was halted, the residual reaction solution in the anion exchange resin column was purged with nitrogen, and the resin column was washed with demineralized water until the alcohol content in the cleaning solution was < 100ppm. The purged and washed residual reaction solution was recycled to the reaction solution feed in the anion exchange adsorption section. The isolated anion exchange resin column was desorbed and regenerated from top to bottom using 5wt% sodium hydroxide aqueous solution at a flow rate of 2000ml/hr, and the desorption solution was produced at the same time. The regenerated anion exchange resin column was washed with demineralized water until the content of sodium hydroxide in water was less than 10ppm (herein a rinse solution was produced), the effluent alcohol reaction solution of the cation adsorption section was then fed to the anion exchange resin column again, and at the moment the effluent of the anion exchange resin column was sent to the distillation section. The mixed solution of the desorption solution and the rinse solution was evaporated and crystallized. The feed and the effluent of the anion exchange resin column were switched on a rotating basis according to the sequence described above.

The mixed solution was fed to an evaporation-dehydration vessel with a negative pressure and an agitator, and dehydrated at an operating pressure of 8 kPaA to give evaporated water. The dehydration stopped when the weight ratio of sodium hydroxide to water was 0.45:1 in the mixed solution within the evaporation-dehydration vessel. The dehydrated mixed solution was added to a crystallization vessel equipped with an agitator and a jacket for circulating the cooling water for stirring and decreasing the temperature. When the temperature dropped to 25°C, the temperature was maintained for crystallization over a period of 3 hours. The crystallization solution containing a crystal was discharged from the bottom of the crystallization vessel to a centrifuge for a centrifugal separation. After centrifugation, a solid and a mother liquor were produced. The mother liquor obtained from the centrifugation was discharged from the system. The solid portion obtained from the centrifugation were washed using a solution containing 43wt% methanol, 49wt% ethanol, 3wt% isopropanol and 5wt% water as the organic solvent at a solution-to-solid weight ratio of 1:1. The washed solid portion was the recovered cocatalyst and was recycled to the reaction section of the biomass hydrogenation reaction for preparing the alcohol; The organic solvent was further added to the washed rinse solution such that the weight ratio of the mixture of the rinse solution and the organic solvent to the mother liquor of the first crystallization was up to 2: 1. The mixture of the rinse solution and the organic solvent and the mother liquor of the first crystallization were mixed and added to a secondary crystallization vessel for a secondary crystallization at 20°C over a period of 0.5 hour after stirring and mixing. After the secondary crystallization, a second centrifugation was performed. The mother liquor after the second centrifugation was discharged from the system and the organic solvent was recovered. The solid after the secondary crystallization was mixed with the feed of the evaporation-dehydration vessel.

In the recovered cocatalyst on a dry-basis, the content of sodium tungstate was 98.75wt%, the content of sodium hydroxide was 0.15wt%, the content of chloride ion was 22ppm, the content of sulfate ion was 45ppm, no iron ion and no other heavy metal ions than iron ion were detected, no coke impurities were detected, the balance on a dry basis was sodium glycolate. The recovery yield of sodium tungstate was 96.16%. The content of the monohydric alcohol and the diol in the heavy component of the distillation section was 3wt% at the same time.

### Example 8:

The cocatalyst in the feed of Example 7 was changed from sodium tungstate to sodium molybdate. Other conditions were the same as those of Example 7.

In the recovered cocatalyst on a dry-basis, the content of sodium molybdate was 95.2wt%, the content of sodium hydroxide was 0.34wt%, the content of chloride ion was 42ppm, the content of sulfate ion was 47ppm, no iron ion and no other heavy metal ions than iron ion were detected, no coke impurities were detected, the balance on a dry basis was sodium glycolate. The recovery yield of sodium tungstate was 91.5%. The content of the monohydric alcohol and the diol in the heavy component of the distillation section was 3wt% at the same time.

### Example 9:

The cocatalyst in the feed of Example 7 was changed from sodium tungstate to sodium phosphotungstate. Other conditions were the same as those of Example 7.

In the recovered cocatalyst on a dry-basis, the content of sodium phosphotungstate was 99.71wt%, the content of sodium hydroxide was 0.05wt%, the content of chloride ion was 17ppm, the content of sulfate ion was 30ppm, no iron ion and no other heavy metal ions than iron ion were detected, no coke impurities were detected, the balance on a dry basis was sodium glycolate. The recovery yield of sodium tungstate was 98.27%. The content of the monohydric alcohol and the diol in the heavy component of the distillation section was 3wt% at the same time.

### Comparative Example 1:

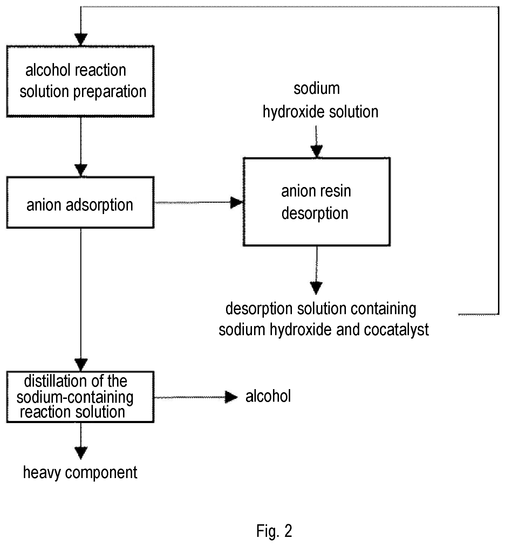

With reference to Figure 2, according to the method disclosed in the application CN109956501A, the same alcohol reaction solution feed as Example 1 was used, and introduced to an anion exchange resin (wherein, the anion exchange resin was the same as Example 1) from top to bottom at a flow rate of 4 times the resin volume per hour for an anion adsorption. Tungstate ion was detected continuously, and the adsorption was halted when an outflow of tungstate was detected; the alcohol reaction solution (containing sodium salt), after an anion removal by adsorption, was subjected to a distillation for an alcohol purification. The residual reaction solution in the anion exchange resin column was purged with nitrogen, and the resin column was washed with demineralized water until the alcohol content in the cleaning solution was < 100ppm. The purged and washed residual reaction solution was recycled to the reaction solution feed in the anion exchange section. The anion exchange resin column was further desorbed from top to bottom using 5wt% sodium hydroxide aqueous solution at a flow rate of 2 times the resin volume per hour. The desorbed resin column was washed with demineralized water until the content of sodium hydroxide was less than 10ppm (herein a rinse solution was produced). The regenerated resin column was fed again with an alcohol reaction solution and the above steps were repeated. The rinse solution and the desorption solution containing sodium hydroxide and sodium tungstate were mixed, and were directly recycled to the reaction section of the biomass hydrogenation reaction for preparing the alcohol as the recycled cocatalyst.

In the recovered cocatalyst on a dry-basis, the content of sodium tungstate was 63.5wt%, the content of sodium hydroxide was 32.8wt%, the content of chloride ion was 195.0ppm, the content of sulfate ion was 580.0ppm, no iron ion and no other heavy metal ions than iron ion were detected, no coke impurities were detected, the balance on a dry basis was sodium glycolate. The recovery yield of sodium tungstate was 100%. The content of the monohydric alcohol and the diol in the heavy component of the distillation section was 20wt%.

It can be seen that the cocatalyst (sodium tungstate) in all feeds of Comparative Example 1 were recycled, but in the recycled cocatalyst (sodium tungstate), the sodium hydroxide content fails to meet the requirement of <1 wt%, and the contents of chloride ion and sulfate ion fail to meet the requirement of <100 ppm. As compared to Example 1, the amount of the diol lost in the heavy component also exceeds 5 wt% in Comparative Example 1.

## Claims

1. A method for recovering a cocatalyst, including following steps:
(1) passing an alcohol reaction solution obtained from a biomass hydrogenation reaction through a cation exchange resin to adsorb and remove a cation of the cocatalyst;
(2) adsorbing an anion of the cocatalyst by passing the cation-removed reaction solution through an anion exchange resin;
(3) desorbing the anion exchange resin adsorbed with the anion to obtain a desorption solution and, optionally, washing the resin to obtain a rinse solution;
(4) after mixing the desorption solution and optionally the rinse solution and then evaporating water, crystallizing the cocatalyst to obtain a solution containing a cocatalyst crystal;
(5) subjecting the above solution containing a cocatalyst crystal to a solid-liquid separation to obtain a crystal and a mother liquor, wherein the resulting crystal is a recovered cocatalyst;
(6) optionally, washing the crystal in step (5) with a solvent and obtaining a rinse solution;
(7) optionally, mixing the rinse solution in step (6) with the mother liquor in step (5), and optionally adding a solvent to the mixed solution, re-crystallizing and performing a solid-liquid separation to obtain a secondary crystal and a secondary mother liquor, mixing the resulting secondary crystal with the desorption solution and optionally the rinse solution obtained in step (3).

2. The method according to claim 1, wherein the cocatalyst is selected from sodium salts or tungsten salts, preferably selected from one or more of ammonium tungstate, sodium phosphotungstate, sodium molybdate, and sodium tungstate.

3. The method according to claim 1 or 2, wherein the alcohol reaction solution contains, preferably consists of, the following components:
1-100 wt%, preferably 10-100 wt%, particularly preferably 40-100 wt%, of water, excluding the endpoint of 100 wt%;
0-98 wt%, preferably 0-90 wt%, particularly preferably 0-60 wt%, of alcohol, excluding the endpoint of 0;
0-50 wt%, preferably 0-10 wt%, of organic impurities primarily composed of sugar coke;
a total content of 0-10 wt%, preferably 0-2 wt%, of ion impurities, preferably selected from chloride ion, sulfate ion, iron ion, other heavy metal ions (including mercury ion and lead ion) than iron ion, formate ion, acetate ion, and glycolate ion;
and 0-10 wt%, preferably 0-5 wt%, particularly preferably 0-1 wt%, of the cocatalyst, excluding the endpoint of 0.

4. The method according to any one of claims 1 to 3, wherein the cocatalyst recovered in step (5) is sent back to step (1) for the biomass hydrogenation reaction so as to prepare the alcohol reaction solution.

5. The method according to any one of claims 1 to 4, wherein the desorption in step (3) is performed using an inorganic base and/or an inorganic salt, such as sodium hydroxide, potassium hydroxide or ammonium nitrate.

6. The method according to claim 5, wherein the dehydration in step (4) stops when the weight ratio of the inorganic base and/or the inorganic salt to water is 0.05-5:1, preferably 0.1-2:1, particularly preferably 0.1-1:1 in the solution.

7. The method according to any one of claims 1 to 6, wherein the evaporated water obtained in the evaporation process in step (4) is used for washing the anion exchange resin after desorption in step (3).

8. The method according to any one of claims 1 to 7, wherein it is carried out in step (1) using one or more cation exchange resin columns, for example, three to four cation exchange resin columns connected in series, and/or, it is carried out in step (2) using one or more anion exchange resin columns, for example, three to four anion exchange resin columns connected in series.

9. The method according to any one of claims 1 to 8, wherein the solvent in step (6) and step (7) is an aqueous or non-aqueous organic solvent, the organic solvent is preferably selected from a monohydric alcohol, such as methanol, ethanol, isopropanol, etc., and these alcohols may be present alone or in combination with each other.

10. The method according to any one of claims 1 to 8, wherein the evaporation in step (4) is carried out under an operating pressure of ≥0.1 kPaA, preferably 0.1 kPaA-200 kPaA, and/or
the temperature is decreased after the water evaporation in step (4).

11. The method according to any one of claims 1 to 8, wherein the cation exchange resin is selected from a strong-acid cation exchange resin, and preferably selected from a strong-acid cation exchange resin with a functional group being a sulfonic acid group (R-SO₃H), and/or
the anion exchange resin is selected from a strong-base anion exchange resin and/or a weak-base anion exchange resin, and preferably selected from a strong-base anion exchange resin with a functional group being R-N(CH₃)₃OH and/or R-N(CH₃)₂(C₂H₄OH)OH, and/or a weak-base anion exchange resin with a functional group being a primary amine, a secondary amine, and/or a tertiary amine.

12. The method according to any one of claims 1 to 11, wherein the desorption in step (1) is performed with an inorganic acid, such as hydrochloric acid or sulfuric acid.

13. The method according to any one of claims 1 to 12, wherein the reaction solution free of the cocatalyst obtained after adsorbing the anion in step (2) is subjected to a distillation to obtain an alcohol, in particular a monohydric alcohol and/or a diol.

14. The method according to any one of claims 1 to 13, wherein the weight ratio of the sum of the solvent added in step (7) and the rinse solution in step (6) to the mother liquor in step (5) is 0-10:1, preferably 0-5:1, excluding endpoint of 0, and/or
the re-crystallization is carried out at 0-100°C, preferably 0-80°C, particularly preferably 10-40°C over a period of greater than 0.1 hour, preferably greater than 1 hour.

15. The cocatalyst obtainable according to the method of any one of claims 1 to 14.

16. The use of the cocatalyst according to claim 15 in a biomass hydrogenation reaction.
